(19) Europäisches Patentamt
European Patent Office
Office européen des brevets

(11) Veröffentlichungsnummer: **0 309 932 B1**

(12) # EUROPÄISCHE PATENTSCHRIFT

(45) Veröffentlichungstag der Patentschrift: **15.04.92**

(51) Int. Cl.⁵: **G01F 1/58**, //G01F15/02

(21) Anmeldenummer: **88115657.4**

(22) Anmeldetag: **23.09.88**

(54) **Magnetisch-induktive Durchflussmessanordnung.**

(30) Priorität: **01.10.87 DE 3733206**

(43) Veröffentlichungstag der Anmeldung:
**05.04.89 Patentblatt 89/14**

(45) Bekanntmachung des Hinweises auf die Patenterteilung:
**15.04.92 Patentblatt 92/16**

(84) Benannte Vertragsstaaten:
**CH DE FR GB IT LI NL**

(56) Entgegenhaltungen:
**DE-A- 3 420 963**
**US-A- 2 896 451**
**US-A- 4 281 552**

(73) Patentinhaber: **FLOWTEC AG**
**Kägenstrasse 7**
**CH-4153 Reinach BL 1(CH)**

(72) Erfinder: **Hafner, Peter Dr.,**
**15 Schwieriweg 15**
**CH-4410 Liestal(CH)**

(74) Vertreter: **Leiser, Gottfried, Dipl.-Ing. et al**
**Patentanwälte Prinz, Leiser, Bunke & Partner**
**Manzingerweg 7**
**W-8000 München 60(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft eine magnetisch-induktive Durchflußmeßanordnung mit einem Meßrohr, dessen Hohlraum im Querschnitt das Profil einer Ellipse mit zwei Hauptachsen hat, einer Vorrichtung zur Erzeugung eines quer zur Strömungsrichtung gerichteten Magnetfelds und mit zwei an längs der ersten Hauptachse einander gegenüberliegenden Stellen des Meßrohres angeordneten Elektroden zum Abgreifen der elektrischen Spannung, die induziert wird, wenn das Meßrohr von einem elektrisch leitenden Medium durchströmt wird.

Bei magnetisch induktiven Durchflußmeßanordnungen dieser Art beruht die Durchflußmessung darauf, daß die mit Hilfe der Elektroden abgegriffene induzierte Spannung zur Induktion des Magnetfelds und zu der mittleren Strömungsgeschwindigkeit des durch das Meßrohr fließenden Strömungsmediums proportional ist. Der zu messende Durchfluß ergibt sich aus dem Produkt der mittleren Strömungsgeschwindigkeit und der Querschnittsfläche des Hohlraums des Meßrohres. Die genaue Bestimmung des Durchflusses aus der mit Hilfe der induzierten Spannung gemessenen Strömungsgeschwindigkeit setzt daher eine exakte Kenntnis der Querschnittsfläche voraus. Diese Voraussetzung ist nicht mehr erfüllt, wenn sich die Querschnittsfläche durch äußere Einflüsse verändert. Solche äußeren Einflüsse sind insbesondere der Druck und die Temperatur des durch das Meßrohr fließenden Strömungsmediums. Eine Änderung der Querschnittsfläche des Meßrohr-Hohlraums hat in der Regel auch eine Änderung des Elektrodenabstandes zur Folge, wodurch sich auch der Zusammenhang zwischen der induzierten Spannung und der zu messenden mittleren Strömungsgeschwindigkeit ändert. Zur Erzielung eines genauen Meßergebnisses sind daher aufwendige Maßnahmen erforderlich, um die Änderungen der Querschnittsfläche festzustellen und deren Einfluß auf das Meßergebnis zu kompensieren.

Bei einer aus der US-A-4 281 552 bekannten Durchflußmeßanordnung dieser Art, bei der der Hohlraum des Meßrohres ein kreisrundes Profil hat, gehören zu der das Magnetfeld erzeugenden Vorrichtung zwei Magnetkerne, die an einander diametral gegenüberliegenden Stellen an der Außenseite des Meßrohres anliegen, und ein die Magnetkerne verbindendes magnetisches Rückschlußteil. Es sind jedoch keine speziellen Maßnahmen getroffen, um die durch Druck und Temperatur verursachten Änderungen des Querschittsprofils des Hohlraums zu beeinflussen. Insbesondere ist das die Magnetkerne verbindende Rückschlußteil nicht so ausgebildet, daß es über die Magnetkerne eine Durchmesseränderung des Meßrohres verhindern kann. In ähnlicher Weise ist eine aus der DE-A-3 420 963 bekannte Durchflußmeßanordnung ausgebildet, bei der zusätzlich jeder Magnetkern einen am Meßrohr anliegenden Polschuh aufweist und im Magnetsystem mindestens eine Trennfuge außerhalb des magnetischen Pfades für den Streufluß angeordnet ist. Auch bei dieser bekannten Durchflußmeßanordnung sind keine speziellen Maßnahmen zur Beeinflussung von Änderungen des Querschnittsprofils des Hohlraums getroffen.

Aufgabe der Erfindung ist die Schaffung einer magnetischinduktiven Durchflußmeßanordnung, die mit geringem Aufwand genaue Meßergebnisse liefert, die unabhängig von durch äußere Einflüsse verursachten Formänderungen des Querschnitts des Meßrohr-Hohlraums sind.

Nach der Erfindung wird diese Aufgabe dadurch gelöst, daß Teile an der Außenseite des Meßrohres derart angeordnet und ausgebildet sind und daß die Wand des Meßrohres derart ausgebildet ist, daß der Querschnitt des Hohlraums bei durch äußere Einflüsse verursachten Formänderungen im wesentlichen ein Ellipsen-Profil beibehält und die Länge der zweiten Hauptachse im wesentlichen konstant bleibt.

Die erfindungsgemäße Lösung beruht auf der Erkenntnis, daß bei der magnetisch-induktiven Durchflußmessung mit Hilfe eines Meßrohres von elliptischem Querschnitt das Meßergebnis in geometrischer Hinsicht nur von der Länge der senkrecht zur Elektrodenachse liegenden Ellipsen-Hauptachse abhängt, während die Länge der anderen Hauptachse, die zugleich dem Elektrodenabstand entspricht, nicht das Meßergebnis beeinflußt. Da erfindungsgemäß bei Formänderungen das Hohlraumquerschnitts die Länge der senkrecht zur Elektrodenachse liegenden Hauptachse konstant gehalten wird und zugleich dafür gesorgt wird, daß der Hohlraumquerschnitt ein Ellipsen-Profil beibehält, wirken sich solche Formänderungen nicht auf das Meßergebnis aus.

Die erfindungsgemäße Lösung gilt auch für den Fall, daß der Hohlraumquerschnitt kreisförmig ist, da ein Kreis der Sonderfall einer Ellipse mit zwei Hauptachsen gleicher Länge ist. Die Erfindung kann daher unmittelbar bei den allgemein üblichen magnetisch-induktiven Meßanordnungen mit kreisförmigem Meßrohr angewendet werden.

Die Erfindung läßt sich mit geringem technischen Aufwand realisieren. Es ist lediglich erforderlich, das Meßrohr an zwei Stellen, die entlang der konstantzuhaltenden Ellipsen-Hauptachse einander gegenüberliegen, so zu stabilisieren, daß sich die Länge dieser Hauptachse nicht verändern kann. Dies kann durch konstruktive Teile geschehen, die an diesen Stellen am Meßrohr angreifen. Eine besonders günstige Maßnahme besteht darin, für diesen Zweck die ohnehin vorhandenen Bestandteile der Magnetfelderzeugungsvorrichtung sowie gegebenenfalls ein vorhandenes Gehäuse zu verwenden. Durch geeignete Wahl der Materialien, aus denen diese Bestandteile bestehen, kann erreicht werden, daß temperaturbedingte Dimensionsänderungen dieser Bestandteile so kompensiert werden, daß sie die Konstanthaltung der Ellipsen-Hauptachse nicht beeinträchtigen.

Wenn das Meßrohr in dieser Weise zur Konstanthaltung der einen Ellipsen-Hauptachse stabilisiert wird, erfolgen Formänderungen des Hohlraumquerschnitts in der Regel so, daß ein Ellipsen-Profil beibehalten wird, ohne daß hierfür besondere Maßnahmen getroffen werden müssen. Zusätzlich ist es jedoch durch geeignete Ausbildung des Meßrohrs möglich, die Formänderungen des Hohlraumquerschnitts zur Aufrechterhaltung eines genauen Ellipsen-Profils zu beeinflussen.

Ausführungsbeispiele der Erfindung werden anhand der Zeichnung beschrieben. In der Zeichnung zeigt:

Fig. 1 eine schematische Darstellung einer magnetischinduktiven Durchflußmeßanordnung zur Erläuterung des Prinzips der Erfindung,

Fig. 2 eine schematische Schnittansicht einer ersten Ausführungsform der magnetisch-induktiven Meßanordnung nach der Erfindung und

Fig. 3 eine schematische Schnittansicht einer zweiten Ausführungform der magnetisch-induktiven Durchflußmeßanordnung nach der Erfindung.

Fig. 1 zeigt in einer perspektivischen Schnittansicht eine magnetisch-induktive Durchflußmeßanordnung 10 mit einem Meßrohr 11. Zwei von einem Strom I durchflossene Erregerspulen 12, 13 erzeugen im Innern des Meßrohres 1 ein Magnetfeld H, das senkrecht zur Achse des Meßrohres 11 gerichtet ist. Zwei in der Wand des Meßrohres 11 angeordnete Elektroden 14, 15, deren Verbindungslinie senkrecht zur Richtung des Magnetfeldes H verläuft, dienen zum Abgriff einer Spannung $U_m$, die induziert wird, wenn ein elektrisch leitendes Medium durch das Meßrohr 11 strömt. Bei dem dargestellten Ausführungsbeispiel besteht das Meßrohr 11 aus einem metallischen Außenmantel 16, der zur elektrischen Isolation gegenüber dem elektrisch leitenden Strömungsmedium mit einer Innenauskleidung 17 aus Isoliermaterial versehen ist, die beispielsweise aus Kunststoff besteht. Dabei ist der Kunststoff so gewählt, daß seine temperaturbedingte Ausdehnung in einem solchen Verhältnis zu der temperaturbedingten Ausdehnung der metallischen Ummantelung 16 steht, daß die Innenauskleidung 17 stets und überall an der Innenwand des metallischen Außenmantels 16 anliegt. Die Innenfläche der Innenauskleidung 17 begrenzt den Hohlraum 18 des Meßrohres.

Die Elektroden 14, 15 können, wie dargestellt, für einen galvanischen Signalabgriff in elektrisch leitender Berührung mit dem Strömungsmedium stehen. Sie können jedoch auch als kapazitive Elektroden ausgebildet sein.

Bekanntlich ist bei einer magnetisch-induktiven Durchflußmeßanordnung der in Fig. 1 dargestellten Art die an den Elektroden 14 und 15 abgegriffene Spannung $U_m$ nach dem Faradeyschen Induktionsgesetz dem Produkt aus der Induktion $B_H$ des Magnetfeldes und der Geschwindigkeit v des Strömungsmediums proportional. Der zu messende Durchfluß Q, d.h. das pro Zeiteinheit durch das Meßrohr strömende Volumen, ist gleich dem Produkt aus der Geschwindigkeit v und aus der Querschnittsfläche F des Hohlraums 18.

Das Meßrohr 11 hat einen elliptischen Querschnitt mit zwei Hauptachsen A, B der Länge 2a bzw. 2b. Die Hauptachse A fällt mit der Verbindungslinie der beiden Elektroden 14 und 15 zusammen, deren Abstand somit gleich der Länge 2a der Hauptachse A ist. Die Hauptachse B, die senkrecht zur Hauptachse A steht, fällt mit der Richtung des Magnetfelds H zusammen.

Da die an den Elektroden 14, 15 abgegriffene Spannung auch von dem Elektrodenabstand abhängt, besteht der folgende Zusammenhang zwischen der Spannung $U_m$ und der Geschwindigkeit v des Strömungsmediums:

$$U_m = K \cdot v \cdot B_H \cdot 2a \qquad (1)$$

wobei K eine Konstante ist.

Da für den Durchfluß Q gilt:

$$Q = v \cdot F \qquad (2)$$

ergibt sich der folgende Zusammenhang zwischen der Spannung $U_m$ und dem Durchfluß Q:

$$U_m = K \cdot \frac{Q}{F} \cdot B_H \cdot 2a \qquad (3)$$

Die Querschnittfläche F kann sich im Betrieb der Durchflußmeßanordnung durch äußere Einflüsse verändern. Solche äußeren Einflüsse sind insbesondere der Druck und die Temperatur des Strömungsmediums. Ein hoher Druck des Strömungsmediums kann eine Dehnung des Meßrohres 11 verursachen, und Temperaturänderungen des Strömungsmediums verursachen Wärmedehnungen oder -zusammenziehungen des metallischen Außenmantels 16 und der Innenauskleidung 17. Durch beide Ursachen verändert sich die Querschnittsfläche F und damit der durch die Formel (3) gegebene Zusammenhang zwischen der induzierten Spannung $U_m$ und dem zu messenden Durchfluß Q.

Bei dem in Fig. 1 angenommenen Ellipsen-Profil des Querschnitts des Hohlraums 18 gilt für dessen Querschnittsfläche:

$F = a \cdot b$ (4)

Setzt man die Formel (4) in die Formel (3) ein, so gilt für den Zusammenhang zwischen der induzierten Spannung $U_m$ und dem Durchfluß Q:

$$U_m = 2K \cdot Q \cdot B_H \cdot \frac{1}{b \cdot \pi} \quad (5)$$

Die Spannung $U_m$ ist also in geometrischer Hinsicht nur von der Länge 2b der Ellipsen-Hauptachse B abhängig, die senkrecht zur Verbindungslinie der Elektroden 14, 15 und parallel zum Magnetfeld H verläuft.

Durch geeignete konstruktive Maßnahmen, für die später anhand der Figuren 2 und 3 Beispiele beschrieben werden, wird dafür gesorgt, daß im Fall von durch Druck, Temperatur oder andere äußere Einflüsse verursachten Änderungen der Querschnittsfläche F des Hohlraums 18:

- die Länge 2b der zweiten Hauptachse B konstant bleibt;
- der Querschnitt des Hohlraums 18 im wesentlichen ein Ellipsen-Profil beibehält.

In Fig. 1 ist strichpunktiert eine solche Formänderung des Querschnitts des Hohlraums 18 sehr übertrieben dargestellt. Der Hohlraumquerschnitt hat weiterhin die Form einer Ellipse, wobei die erste Hauptachse A jetzt die Länge $2a'$ hat, während die Länge 2b der zweiten Hauptachse B unverändert geblieben ist. Die Querschnittsfläche

$F' = a' \cdot b \cdot \pi$ (6)

ist größer als die Querschnittsfläche F vor der Verformung, doch haben auch die Elektroden 14 und 15 jetzt einen größeren Abstand als vor der Verformung. Daher gilt für den Zusammenhang zwischen der Spannung $U_m$ und dem Durchfluß Q unverändert die Formel (5). Damit wirken sich äußere Einflüsse, wie Druck und Temperatur, die den Querschnitt des Hohlraums 18 des Meßrohres 11 verändern, nicht auf das Meßergebnis aus.

Der Begriff "Ellipsen-Profil" schließt den Sonderfall ein, daß die beiden Hauptachsen A und B der Ellipse die gleiche Länge haben; in diesem Fall ist das Profil des Hohlraumquerschnitts ein Kreis mit dem Durchmesser D. Dieser Fall ist in Fig. 1 für das unverformte Meßrohr 11 dargestellt. Dies entspricht der üblichen Ausbildung von magnetisch-induktiven Durchflußmeßanordnungen, bei denen der Meßrohr-Hohlraum gewöhnlich kreisförmig ist. In Fig. 1 haben die beiden Hauptachsen A und B im unverformten Zustand des Meßrohres eine Länge, die gleich dem Durchmesser D des Hohlraums 18 ist. Bei der strichpunktiert dargestellten Vergrößerung des Hohlraumquerschnitts ist die Länge 2b der Hauptachse B weiterhin gleich dem Durchmesser D, während die Länge $2a'$ der Hauptachse A größer als der Durchmesser D ist.

Es ist durch eine sehr einfache konstruktive Maßnahme möglich, eine elliptische Verformung des Hohlraumprofils in der Weise zu erzwingen, daß die Länge der einen Hauptachse unverändert bleibt: Das Meßrohr wird an zwei Stellen, die auf der konstantzuhaltenden Hauptachse B einander diametral gegenüberliegen, durch am Meßrohr angreifende Teile so stabilisiert, daß eine Längenänderung dieser Hauptachse verhindert wird. Jede Änderung des Hohlraumquerschnitts bewirkt zwangsläufig eine Verformung, die eine Längenänderung der anderen Hauptachse A zur Folge hat. Bei gleichmäßiger Wandstärke des Meßrohrs ist die Verformung auch ohne besondere Maßnahmen in der Regel zumindest näherungsweise elliptisch.

Fig. 2 zeigt eine Schnittansicht durch eine magnetisch-induktive Durchflußmeßanordnung 20, die in der zuvor erläuterten Weise ausgebildet ist. Die Durchflußmeßanordnung hat in gleicher Weise wie die Durchflußmeßanordnung 10 von Fig. 1 ein Meßrohr 21, zwei Erregerspulen 22, 23 zur Erzeugung eines Magnetfelds H im Innern des Meßrohres und zwei Elektroden 24, 25 zum Abgreifen der induzierten

Spannung. Der Querschnitt des Hohlraums 28 des Meßrohres 21 hat wieder ein elliptisches Profil mit zwei Hauptachsen A und B, die in dem dargestellten unverformten Zustand gleich groß sind, was bedeutet, daß der unverformte Querschnitt kreisförmig ist.

Die beiden Erregerspulen 22, 23 sind Bestandteile einer Magnetfelderzeugungsvorrichtung 30, die außerdem zwei von den Erregerspulen 22, 23 umgebene Magnetkerne 31, 32, zwei an den Stirnseiten der Magnetkerne 31, 32 angebrachte Polschuhe 33, 34 und ein die beiden Magnetkerne 31, 32 miteinander verbindendes Rückschlußteil 35 aufweist. Das Rückschlußteil 35 bildet mit den Magnetkernen 31, 32 den Magnetkreis der Magnetfelderzeugungsvorrichtung 30.

Die Polschuhe 33 und 34 sind gekrümmt und umgeben das Meßrohr 21 teilweise, wobei der Krümmungsradius der Polschuhe 33, 34 etwas größer ist als der Krümmungsradius des Meßrohres 21. Dadurch kann erreicht werden, daß das im Hohlraum 28 des Meßrohres 21 erzeugte Magnetfeld H weitgehend homogen ist. Die Polschuhe 33, 34 liegen an einander diametral gegenüberliegenden Stellen in Verlängerung der Hauptachse B an der Außenseite des Meßrohres 21 an. Da die Polschuhe 33, 34 durch die Magnetkerne 31, 32 und das Rückschlußteil 35 in einem definierten Abstand voneinander gehalten werden, erzwingen diese konstruktiven Teile eine definierte Länge der Hauptachse B des Querschnittsprofils des Hohlraums 28.

Bei einer durch Druckänderungen verursachten Vergrößerung der Querschnittsfläche des Hohlraums 18 bleiben die konstruktiven Teile 31, 32, 33, 34, 35 unverändert, so daß sich auch die Länge 2b der Hauptachse B nicht ändern kann. Das Meßrohr 21 muß sich daher in der Richtung der Hauptachse A verformen, wobei die Länge der Hauptachse A zunimmt.

Wenn dagegen eine Temperaturänderung eine Ursache für die Änderung der Querschnittsfläche des Hohlraums 28 ist, wirkt sich diese Temperaturänderung auch auf die konstruktiven Teile aus, die die Länge der Hauptachse B konstant halten sollen. Dies gilt sowohl bei einer Änderung der Umgebungstemperatur als auch bei einer Änderung der Temperatur des durch das Meßrohr fließenden Strömungsmediums, da sich dessen Temperatur auch auf die Bestandteile des Magnetkreises überträgt. Dadurch ändern sich die Abmessungen der Bestandteile des Magnetkreises gemäß ihren Wärmeausdehnungskoeffizienten. Bei der Durchflußmessung von sehr heißen Strömungsmedien können sowohl die Änderungen der Querschnittsfläche des Hohlraumes 28 als auch die Längenänderungen der Magnetkreisbestandteile beträchtlich sein.

Durch geeignete Wahl der Materialien, aus denen die Bestandteile des Magnetkreises bestehen, können jedoch die temperaturbedingten Einflüsse so kompensiert werden, daß die Länge 2b der Hauptachse B konstant bleibt. Hierzu werden die Materialien der Bestandteile des Magnetkreises so gewählt, daß die folgende Beziehung erfüllt ist:

$$\tfrac{1}{2} \cdot h_1 (1 + T \cdot k_1) - h_2 (1 + T \cdot k_2) = b = \text{konstant} \qquad (7)$$

Darin sind:

- $h_1$: die Höhe des Rückschlußteils 35 parallel zur Hauptachse B;
- $h_2$: die Höhe eines der Magnetkerne 31, 32;
- $k_1$: der Wärmeausdehnungkoeffizient des Materials des Rückschlußteils 35;
- $k_2$: der Wärmeausdehnungskoeffizient des Materials der Magnetkerne 31 und 32;
- T: die Temperatur.

Die Dicken der Wand des Meßrohrs 21 und der Polschuhe 33, 34 werden zur Vereinfachung vernachlässigt. Dann gilt für die halbe Länge b der Hauptachse B:

$$b = \tfrac{1}{2} \cdot h_1 - h_2 \qquad (8)$$

Aus den Formeln (7) und (8) ergibt sich dann die folgende Bedingung für die Wärmeausdehnungskoeffizienten der Materialien der Magnetkreis-Bestandteile:

$$\frac{k_1}{k_2} = 2 \cdot \frac{h_2}{h_1} \qquad (9)$$

Wenn diese Bedingung erfüllt ist, bleibt der Abstand zwischen den Polschuhen 33 und 34 und damit die Länge 2b der Hauptachse B unabhängig von Temperaturänderungen konstant. Folglich kann grundsätzlich durch entsprechende Abstimmung der Geometrie und der Materialien der Bestandteile der Magnetfelderzeugungsvorrichtung 30 die Länge der senkrecht zu der Elektrodenachse liegenden Hauptachse B des Ellipsen-Profils des Hohlraums 28 auch bei temperaturbedingten Querschnittsänderungen konstant gehalten werden.

Damit die beschriebene Kompensation der temperaturbedingten Dimensionsänderungen der Bestandteile des Magnetkreises wirksam wird, ist eine gute thermische Ankopplung dieser Bestandteile an das Meßrohr bzw. an das durch das Meßrohr fließende Strömungsmedium notwendig, damit die Temperatur dieser Bestandteile möglichst schnell die Temperatur des Meßrohres bzw. des Strömungsmediums annehmen. In Fig. 2 erfolgt die thermische Ankopplung hauptsächlich über die am Meßrohr 21 anliegenden Polschuhe 33 und 34, wobei sich die Wärme über die Magnetkerne 31 und 32 bis in das Rückschlußteil 35 fortpflanzt. Falls diese Ankopplung nicht ausreicht, können zusätzlich wärmeleitende Brücken vorgesehen werden, die beispielsweise aus Vergußmasse oder Metall bestehen und eine direkte Wärmeübertragung vom Meßrohr 21 zum Rückschlußteil 35 bewirken. Zusätzlich kann zwischen dem Rückschlußteil 35 und einem die Anordnung umgebenden Gehäuse eine thermische Isolation vorgesehen werden, um die Temperatur der Bestandteile des Magnetkreises auf dem optimalen Wert zu halten.

Fig. 3 zeigt eine abgeänderte Ausführungsform der magnetischinduktiven Durchflußmeßanordnung 20 von Fig. 2, wobei die Bestandteile, die denjenigen von Fig. 2 entsprechen, mit den gleichen Bezugszeichen wie in Fig. 2 bezeichnet sind und nicht nochmals beschrieben werden. Die Ausführungsform von Fig. 3 unterscheidet sich von derjenigen von Fig. 2 in folgendem:

- Die Polschuhe 33, 34 sind fortgelassen; statt dessen liegen die Magnetkerne 31, 32 mit ihren Stirnflächen unmittelbar an der Außenseite des Meßrohres 21 an.
- Das Meßrohr 21 und die Magnetfelderzeugungsvorrichtung 30 sind von einem Gehäuse 40 umgeben und an diesem durch Abstützelemente 41, 42, die sich in Verlängerung der Hauptachse B zwischen dem Rückschlußteil 35 und dem Gehäuse 40 erstrecken, fest angebracht.
- Das Rückschlußteil 35 ist schwächer ausgebildet als bei der Ausführungsform von Fig. 2, so daß seine Festigkeit nicht ausreichend wäre, um eine Verformung des Meßrohres 21 in der Richtung der Hauptachse B zu verhindern, doch bildet in diesem Fall das Gehäuse 40 das konstruktive Teil, das das Meßrohr 21 über die Magnetkerne 31 und 32 an den in Verlängerung der Hauptachse B einander gegenüberliegenden Stellen stabilisiert. Damit die Hauptachse B auch im Falle temperaturbedingter Änderungen der Querschnittsfläche konstant gehalten wird, muß in diesem Fall das Material des Gehäuses 40 gegenüber den Materialien der Abstützelemente 41, 42 und der Magnetkerne 31, 32 so gewählt werden, daß die Bedingung der Formel (9) erfüllt ist.

Die in den Figuren 2 und 3 dargestellten Ausführungsformen ergeben den Vorteil, daß für die Konstanthaltung der Hauptachse B nur Bestandteile der Durchflußmeßanordnung verwendet werden, die ohnehin vorhanden sind, so daß für diesen Zweck keine zusätzlichen konstruktiven Teile benötigt werden. Dies ist natürlich nicht unbedingt erforderlich. In manchen Fällen kann es zweckmäßig sein, zusätzliche konstruktive Teile zur Stabilisierung des Meßrohres in der Richtung der Hauptachse B vorzusehen. Solche Teile könnten beispielsweise zu beiden Seiten der Magnetkerne 31, 32 bzw. der Polschuhe 33, 34 am Meßrohr angreifen. Solche Abänderungen bieten dem Fachmann keine Schwierigkeit und sind daher nicht dargestellt.

Wie bereits erwähnt, ergibt die beschriebene Stabilisierung der Hauptachse B bei Meßrohren mit gleichförmiger Wandstärke in der Regel bereits eine im wesentlichen elliptische Verformung des Querschnittsprofils, wie sie in Fig. 1 dargestellt ist. Sollte in besonderen Fällen das entstehende Querschnittsprofil nicht ausreichend genau der Ellipsenform entsprechen, so kann durch eine geeignete konstruktive Ausbildung des Meßrohres die Formänderung verbessert werden. Eine hierfür geeignete Maßnahme besteht darin, daß die Wand des Meßrohres mit stellenweise unterschiedlicher Dicke ausgebildet wird, wobei die größte Dicke in Verlängerung der Hauptachse B, also im Bereich der Polschuhe bzw. der Magnetkerne, und die geringste Dicke in Verlängerung der Hauptach se A, also im Bereich der Elektroden vorzusehen ist. Anstatt die Wanddicke unterschiedlich zu machen, ist es auch möglich, die Wand des Meßrohres im Bereich der Polschuhe bzw. Magnetkerne mit einer Armierung zu versehen. Alle diese Maßnahmen haben den Zweck, eine Verformung des Hohlraumquerschnitts in der Richtung der Hauptachse A zu begünstigen.

**Patentansprüche**

1. Magnetisch-induktive Durchflußmeßanordnung mit einem Meßrohr (21), dessen Hohlraum im Querschnitt das Profil einer Ellipse mit zwei Hauptachsen (A, B) hat, einer Vorrichtung (22, 23, 31, 32, 33, 34) zur Erzeugung eines quer zur Strömungsrichtung gerichteten Magnetfelds und mit zwei an längs der ersten Hauptachse (A) einander gegenüberliegenden Stellen des Meßrohres angeordneten Elektroden (24, 25) zum Abgreifen der elektrischen Spannung, die induziert wird, wenn das Meßrohr (21) von

einem elektrisch leitenden Medium durchströmt wird, **dadurch gekennzeichnet,** daß Teile (31, 32, 35, 40) an der Außenseite des Meßrohres (21) derart angeordnet und ausgebildet sind und daß die Wand des Meßrohres (21) derart ausgebildet ist, daß der Querschnitt des Hohlraums bei durch äußere Einflüsse verursachten Formänderungen im wesentlichen ein Ellipsen-Profil beibehält und die Länge der zweiten Hauptachse (B) im wesentlichen konstant bleibt.

**2.** Durchflußmeßanordnung nach Anspruch 1, **dadurch gekennzeichnet,** daß die die Länge der zweiten Hauptachse (B) konstanthaltenden Teile (31, 32, 35, 40) aus unterschiedlichen Materialien bestehen, deren Wärmeausdehnungskoeffizienten so aufeinander abgestimmt sind, daß temperaturbedingte Formänderungen des Meßrohres zu keiner Längenänderung der zweiten Hauptachse führen.

**3.** Durchflußmeßanordnung nach Anspruch 2, **dadurch gekennzeichnet,** daß die die Länge der zweiten Hauptachse (B) konstanthaltenden Teile (31, 32, 35, 40) an das Meßrohr bzw. das durch das Meßrohr strömende Medium derart thermisch angekoppelt sind, daß temperaturbedingte Formänderungen des Meßrohres zu keiner Längenänderung der zweiten Hauptachse führen.

**4.** Durchflußmeßanordnung nach einem der Ansprüche 1 bis 3, dadurch gekennzeichnet, daß zu den die Länge der zweiten Hauptachse (B) konstanthaltenden Teilen Magnetkerne (31, 32) und ein magnetisches Rückschlußteil (35) der Vorrichtung zur Erzeugung des Magnetfeldes gehören.

**5.** Durchflußmeßanordnung nach Anspruch 4, **dadurch gekennzeichnet,** daß die Vorrichtung zur Erzeugung des Magnetfeldes zwei Magnetkerne (31, 32) aufweist, die an längs der zweiten Hauptachse (B) einander diametral gegenüberliegenden Stellen an der Außenseite des Meßrohres (21) anliegen und dadurch die Länge der zweiten Hauptachse (B) bei Formänderungen des Meßrohres (21) im wesentlichen konstant halten.

**6.** Durchflußmeßanordnung nach Anspruch 5, **dadurch gekennzeichnet,** daß die Magnetkerne (31, 32) mit Polschuhen (33, 34) versehen sind, die an der Außenseite des Meßrohres (21) anliegen.

**7.** Duchflußmeßanordnung nach Anspruch 6, **dadurch gekennzeichnet,** daß die Polschuhe (33, 34) einen größeren Krümmungsradius als das Meßrohr (21) haben.

**8.** Durchflußmeßanordnung nach einem der Ansprüche 1 bis 7, **dadurch gekennzeichnet,** daß zu den die Länge der zweiten Hauptachse (B) konstanthaltenden Teilen ein das Meßrohr (21) und die Felderzeugungsvorrichtung (22, 23, 31, 32, 35) umgebendes Gehäuse (40) gehört.

**9.** Durchflußmeßanordnung nach einem der vorhergehenden Ansprüche, **dadurch gekennzeichnet,** daß die Wand des Meßrohres (21) stellenweise unterschiedlich dick ist.

**10.** Durchflußmeßanordnung nach einem der vorhergehenden Ansprüche, **dadurch gekennzeichnet,** daß die Wand des Meßrohres (21) stellenweise armiert ist.

**Claims**

**1.** An electromagnetic flow measuring arrangement comprising a measuring tube (21) of which the cavity in cross-section has the profile of an ellipse having two major axes (A, B), a means ( 22, 23, 31, 32, 33, 34) for generating a magnetic field directed transversely of the flow direction and two electrodes (24, 25) arranged at points of the measuring tube opposite each other along the first major axis (A) for tapping off the electrical voltage which is induced when the measuring tube (21) is traversed by an electrically conductive medium, characterized in that members (31, 32, 35, 40) are arranged on the external side of the measuring tube (12) and formed in such a manner on the external side of the measuring tube (21) that the wall of the measuring tube (21) is such that the cross-section of the cavity on changes caused by external influences retains substantially an ellipse profile and that the length of the second major axis (B) remains substantially constant.

**2.** Flow measuring arrangement according to claim 1, characterized in that the members (31, 32, 35, 40) keeping the length of the second major axis (B) constant consist of different materials having thermal coefficients of expansion which are adapted to each other in such a manner that temperature-induced

shape changes of the measuring tube do not lead to any change in length of the second major axis.

3. Flow measuring arrangement according to claim 2, characterized in that the members ((31, 32, 35, 40) keeping the length of the second major axis (B) constant are thermally coupled to the measuring tube or to the medium flowing through the measuring tube in such a manner that temperature-induced shape changes of the measuring tube do not lead to any change in length of the second major axis.

4. Flow measuring arrangement according to any one of claims 1 to 3, characterized in that magnetic cores (31, 32) and a magnetic yoke member (35) of the means for generating a magnetic field are among the members keeping the length of the second major axis (B) constant.

5. Flow measuring arrangement according to claim 4, characterized in that the means for generating the magnetic field comprises two magnetic cores (31, 32) which bear on the outer side of the measuring tube (21) at points lying diametrically opposite each other along the second major axis (B) and thereby keep the length of the second major axis (B) substantially constant on shape changes of the measuring tube (21).

6. Flow measuring arrangement according to claim 5, characterized in that the magnetic cores (31, 32) are provided with pole shoes which bear on the outer side of the measuring tube (21).

7. Flow measuring arrangement according to claim 6, characterized in that the pole shoes (33, 34) have a greater radius of curvature than the measuring tube (21).

8. Flow measuring arrangement according to any one of claims 1 to 7, characterized in that a housing (40) surrounding the measuring tube (21) and the field generating means (22, 23, 31, 32, 35) is among the members keeping the length of the second major axis (B) constant.

9. Flow measuring arrangement according to any one of the preceding claims, characterized in that the wall of the measuring tube (21) has areas of different thickness.

10. Flow measuring arrangement according to any one of the preceding claims, characterized in that the wall of the measuring tube (21) is locally reinforced.

**Revendications**

1. Agencement pour la mesure magnéto-inductive de débit, comportant un tube de mesure (21) dont la cavité a en section droite le profil d'une ellipse ayant deux axes principaux (A, B), un dispositif (22, 23, 31, 32, 33, 34) pour créer un champ magnétique dirigé transversalement à la direction d'écoulement, et deux électrodes (24, 25) disposées en des endroits du tube de mesure situés en face l'un de l'autre sur le premier axe principal (A) et destinées à capter la tension électrique qui est induite lorsque le tube de mesure (21) est traversé par un milieu électriquement conducteur, caractérisé en ce que des éléments (31, 32, 35, 40) placés à l'extérieur du tube de mesure (21) sont disposés et réalisés de manière telle, et la paroi du tube de mesure (21) est réalisée de manière telle, que la section droite de la cavité garde sensiblement le profil d'une ellipse lors de modifications de forme provoquées par des influences extérieures, et en ce que la longueur du deuxième axe principal (B) reste sensiblement constante.

2. Agencement conforme à la revendication 1, caractérisé en ce que les éléments (31, 32, 35, 40) qui maintiennent constante la longueur du deuxième axe principal (B) sont en des matériaux différents dont les coefficients de dilatation thermique sont coordonnés l'un avec l'autre d'une façon telle que des modifications, provoquées par la température, de la forme du tube de mesure n'entraînent aucune modification de la longueur du deuxième axe principal.

3. Agencement conforme à la revendication 2, caractérisé en ce que les éléments (31, 32, 35, 40) qui maintiennent constante la longueur du deuxième axe principal (B) sont couplés thermiquement au tube de mesure ou au milieu qui s'écoule dans le tube de mesure d'une façon telle que des modifications, provoquées par la température, de la forme du tube de mesure n'entraînent aucune modification de la longueur du deuxième axe principal.

4. Agencement conforme à l'une des revendications 1 à 3, caractérisé en ce que des noyaux magnétiques (31, 32) et un élément (35) de fermeture du circuit magnétique du dispositif pour créer le champ magnétique font partie des éléments qui maintiennent constante la longueur du deuxième axe principal (B).

5. Agencement conforme à la revendication 4, caractérisé en ce que le dispositif pour créer le champ magnétique présente deux noyaux magnétiques (31, 32) qui sont adjacents à la surface extérieure du tube de mesure (21) en des endroits de celle-ci diamétralement opposés l'un de l'autre sur le deuxième axe principal (B), et maintiennent ainsi sensiblement constante la longueur du deuxième axe principal (B) lors de modifications de la forme du tube de mesure (21).

6. Agencement conforme à la revendication 5, caractérisé en ce que les noyaux magnétiques (31, 32) sont munis de cornes polaires (33) adjacentes à la surface extérieure du tube de mesure (21).

7. Agencement conforme à la revendication 6, caractérisé en ce que les cornes polaires (33, 34) ont un rayon de courbure plus grand que celui du tube de mesure (21).

8. Agencement conforme à l'une des revendications 1 à 7, caractérisé en ce qu'un boîtier (40) entourant le tube de mesure (21) et le dispositif (22, 23, 31, 32, 35) pour créer le champ magnétique fait partie des éléments qui maintiennent constante la longueur du deuxième axe principal (B).

9. Agencement conforme à l'une des revendications précédentes, caractérisé en ce que la paroi du tube de mesure (21) a une épaisseur différente suivant les endroits.

10. Agencement conforme à l'une des revendications précédentes, caractérisé en ce que la paroi du tube de mesure (21) est armée en certains endroits.

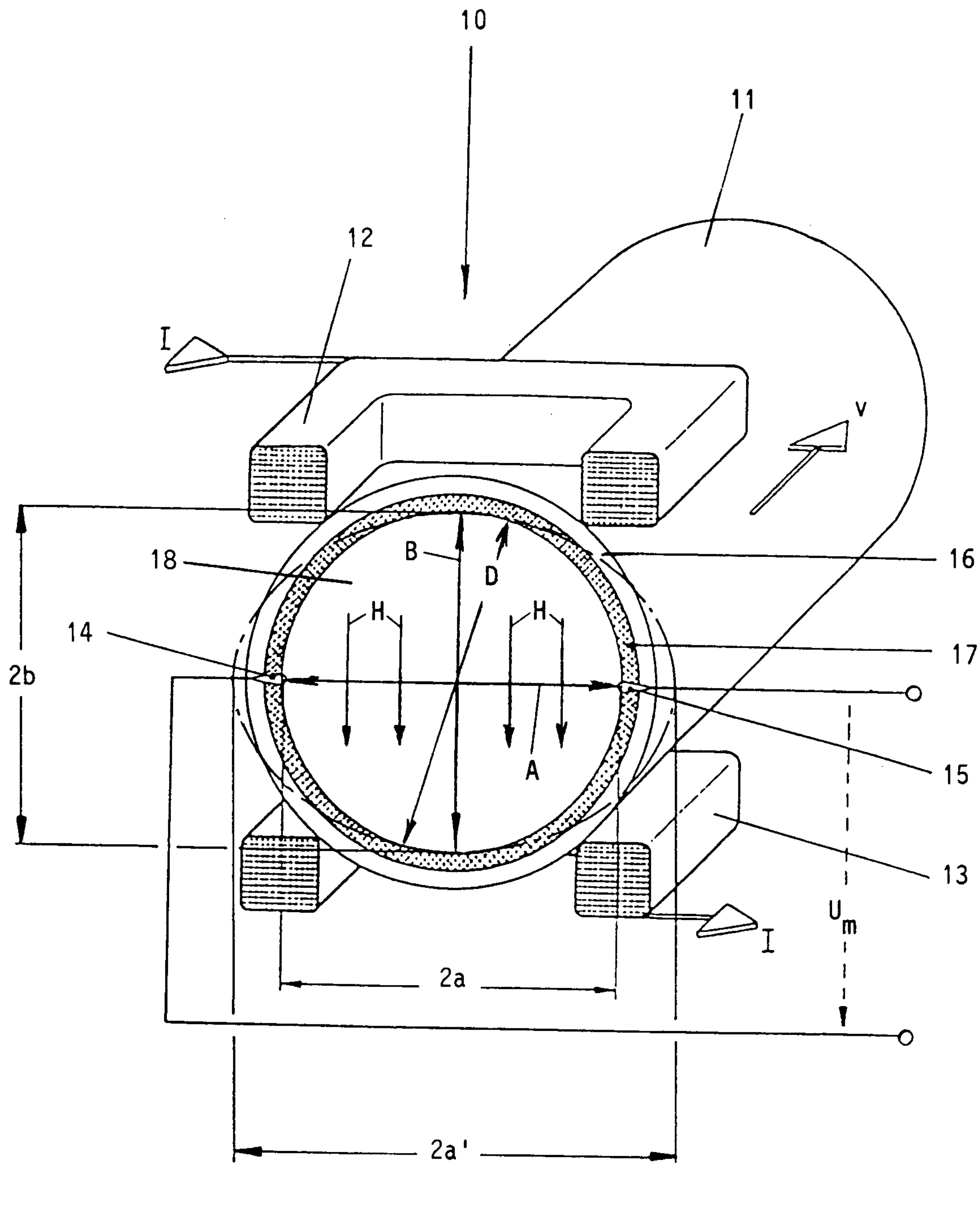


FIG. 1

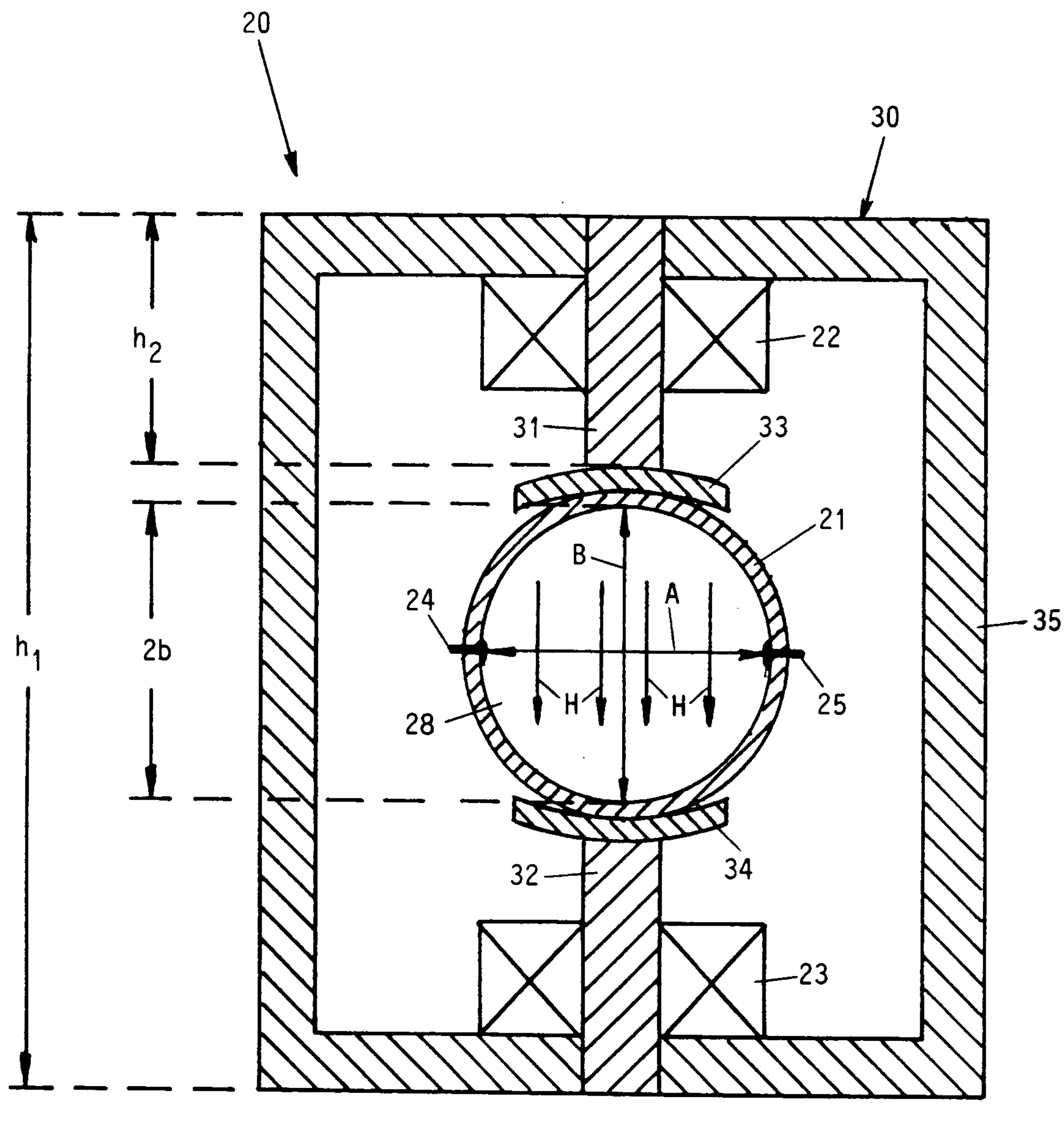


FIG. 2

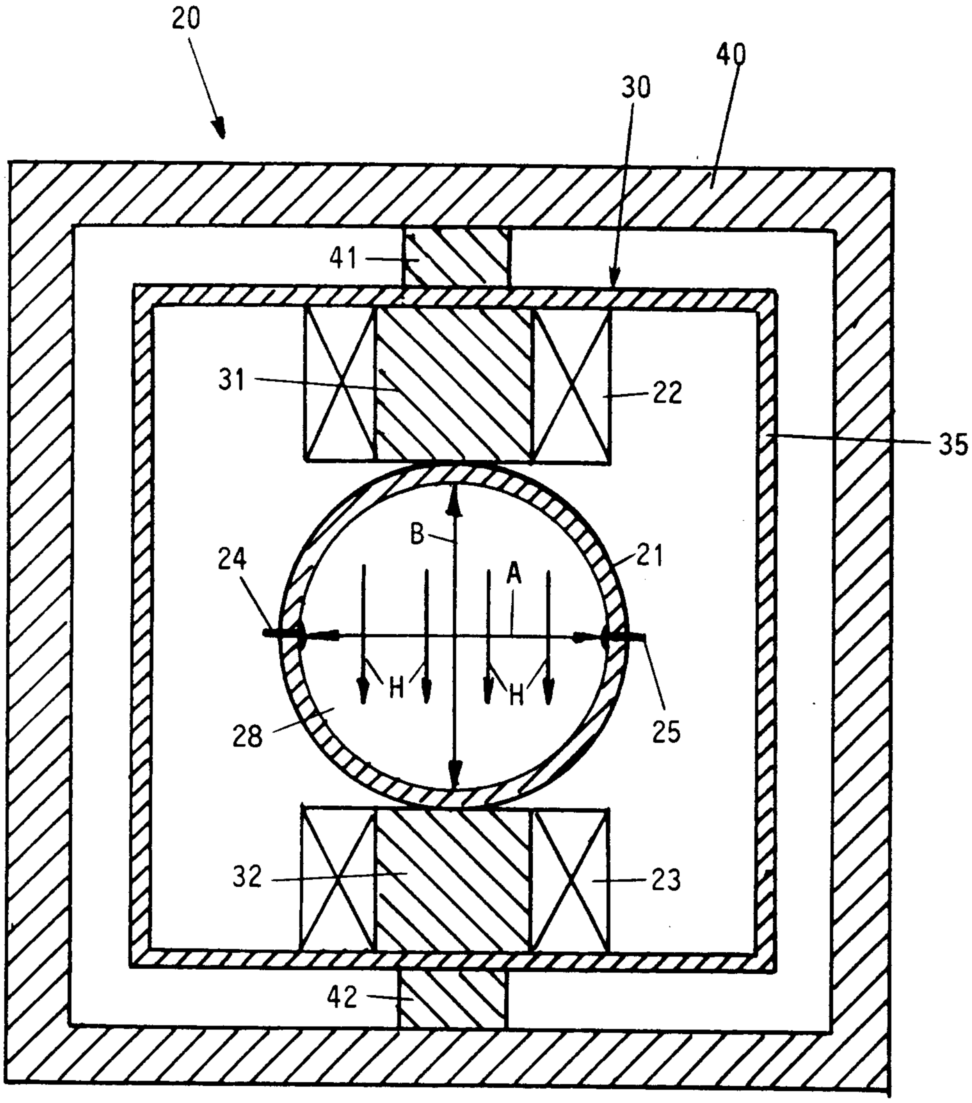


FIG. 3